# FASCICULE DE BREVET EUROPEEN

(11) **EP 3 724 473 B1**
(45) Date de publication et mention de la délivrance du brevet: **06.10.2021**
(21) Numéro de dépôt: 18833473.4
(22) Date de dépôt: 12.12.2018
(51) Int. Cl.: F02C 7/00, F01M 11/04

(54) **PARTIE DE CONDUITE DE DRAINAGE D'UN FLUIDE POUR UNE TURBOMACHINE**
ABSCHNITT EINER FLÜSSIGKEITSABFLUSSLEITUNG FÜR EINE TURBOMASCHINE
PORTION OF A FLUID DRAINAGE CONDUIT FOR A TURBOMACHINE

(30) Priorité: 14.12.2017 FR 1762108
(43) Date de publication de la demande: 21.10.2020
(73) Titulaire: SAFRAN AIRCRAFT ENGINES, 75015 Paris (FR)
(72) Inventeur: FERT, Jérémy, Edmond, 77550 MOISSY-CRAMAYEL (FR); WAISSI, Bellal, 77550 MOISSY-CRAMAYEL (FR)
(74) Mandataire: Cabinet Beau de Loménie
(86) Numéro de dépôt international: PCT/FR2018/053228
(87) Numéro de publication internationale: WO 2019/115939

(56) Documents cités:
- US-A- 5 285 636
- US-A1- 2013 201 023

## Description

### DOMAINE TECHNIQUE

Le présent exposé concerne la détection de fuites sur une turbomachine d'aéronef, et plus particulièrement une partie de conduite de drainage d'un fluide pour une turbomachine, un ensemble de drainage comprenant une telle partie de conduite et un procédé de détection de fuite sur une turbomachine munie d'un tel ensemble de drainage.

### ARRIÈRE-PLAN TECHNOLOGIQUE

Les turbomachines, notamment celles utilisées sur les aéronefs, utilisent des fluides tels que du fluide hydraulique, du carburant, de l'huile ou encore de l'eau. Les contraintes industrielles et réglementaires imposent de gérer les fuites liées à ces fluides, ce qui conduit les constructeurs à prévoir des conduites de drainage pour récupérer les fuites au niveau de chaque composant susceptible de fuir. Cette récupération est associée à une exigence de maintenance, afin de déterminer quels sont les composants qui fuient.

A cet effet, on connaît du document US 5,285,636 une boîte de drainage à laquelle aboutissent les conduites de drainage de tous les composants concernés, chaque conduite aboutissant dans une chambre séparée. Les fluides sont ensuite stockés dans la boîte de drainage et le niveau de remplissage des chambres permet de déterminer le débit de fuite.

Toutefois, un tel système impose des conduites de drainage séparées depuis chaque composant jusqu'à la boîte de drainage. Or, pour des raisons de masse et d'intégration, il est préférable de regrouper les conduites de drainage en des drains communs. Cependant, dans ces cas, il est actuellement difficile et long de déterminer de quel composant la fuite provient. En outre, une telle boîte de drainage est un équipement complexe et onéreux. Par ailleurs, la demande de brevet US 2013/201023 divulgue un circuit de drainage permettant de surveiller un écoulement excessif de fluide. Il existe donc un besoin pour un nouveau type de partie de conduite de drainage.

### PRÉSENTATION GÉNÉRALE

A cet effet, le présent exposé concerne une partie de conduite de drainage d'un fluide pour une turbomachine d'aéronef, comprenant un tronçon amont, un tronçon aval fixe par rapport au tronçon amont et une chambre de rétention sur laquelle le tronçon amont débouche, la chambre de rétention étant apte à communiquer avec le tronçon aval par au moins une première ouverture et au moins une deuxième ouverture, la partie de conduite de drainage comprenant en outre un obturateur configuré pour obturer la deuxième ouverture, les première et deuxième ouvertures étant prévues de sorte que lorsque l'obturateur obture la deuxième ouverture, la chambre de rétention est apte à retenir du fluide en permettant à un trop-plein de fluide de s'écouler du tronçon amont vers le tronçon aval par la première ouverture, et lorsque l'obturateur n'obture pas la deuxième ouverture, le fluide peut s'écouler du tronçon amont vers le tronçon aval au moins par la deuxième ouverture.

Par souci de simplification, on utilisera le terme « conduite » pour désigner indifféremment une conduite de drainage ou une partie de conduite de drainage, étant entendu qu'une partie de conduite forme une conduite et qu'une conduite peut former une partie d'une conduite plus grande.

On comprend qu'il peut y avoir une ou plusieurs premières ouvertures, et une ou plusieurs deuxièmes ouvertures. Sauf indication contraire, par « une » ou « la » première ou deuxième ouverture, on entend « au moins une » ou « l'au moins une » ou encore « chaque » première ou deuxième ouverture. Réciproquement, l'emploi générique du pluriel peut inclure le singulier.

Les termes « amont » et « aval » s'entendent dans le sens normal d'écoulement des fuites de fluide à travers la conduite de drainage. Le tronçon amont est en amont de la chambre de rétention. De même, le tronçon aval est en aval de la chambre de rétention. Le fluide s'écoule ainsi du tronçon amont au tronçon aval via la chambre de rétention.

La première ouverture est distincte de la deuxième ouverture. La première ouverture permet la communication fluidique entre la chambre de rétention et le tronçon aval. La deuxième ouverture, hormis lorsqu'elle est obturée, permet la communication fluidique entre la chambre de rétention et le tronçon aval. La deuxième ouverture peut être prévue de sorte à être disposée plus bas que la première ouverture lors du fonctionnement de la turbomachine.

L'obturateur peut être commandé, par exemple manuellement ou électroniquement, pour obturer ou non la deuxième ouverture.

Grâce aux caractéristiques précitées, la conduite de drainage peut retenir une partie des fuites dans la chambre de rétention, notamment entre la première ouverture et la deuxième ouverture. Lors de la maintenance, en actionnant successivement les obturateurs liés aux différents composants, il est possible de déterminer facilement et rapidement quel est le composant qui fuit, même si toutes les conduites de drainage débouchent sur des conduites de drainage communes.

En outre, la récupération des fuites dans le tronçon aval, que la deuxième ouverture soit obturée ou non, permet un traitement propre des fuites dans tous les cas. Ainsi, il est possible de diminuer les amendes infligées par les aéroports en cas de salissure de la piste.

Dans certains modes de réalisation, l'obturateur comprend un clapet dont un organe de commande est accessible depuis l'extérieur de la partie de conduite de drainage. Ainsi, l'actionnement de l'obturateur est aisé pour un mécanicien.

Dans certains modes de réalisation, la deuxième ouverture est disposée de façon à permettre, lorsque l'obturateur ne l'obture pas, de faire communiquer la chambre de rétention avec le tronçon aval. Par exemple, la deuxième ouverture peut être disposée dans une partie inférieure de la chambre de rétention pour permettre l'évacuation par gravité du liquide retenu. On comprend que la conduite de drainage est conçue pour être fixée sur une turbomachine avec une orientation déterminée, et qu'il est possible de positionner la deuxième ouverture compte tenu de cette orientation.

Plus généralement, dans certains modes de réalisation, la première ouverture est plus proche du tronçon amont que la deuxième ouverture, et/ou la deuxième ouverture est plus proche du tronçon aval que la première ouverture.

Dans son orientation prévue, la partie de conduite de drainage peut être conçue pour permettre un écoulement gravitaire des fuites de l'amont vers l'aval. On comprend que la totalité du fluide provenant du tronçon amont s'écoule alors par écoulement gravitaire vers la chambre de rétention, le fluide pouvant passer uniquement par l'une de la première ouverture et de la deuxième ouverture pour rejoindre le tronçon aval. Grâce à la caractéristique précitée, du fait d'un écoulement gravitaire du tronçon amont vers la chambre de rétention, il peut se produire une accumulation naturelle entre la deuxième ouverture obturée et la première ouverture. La première ouverture fait office de trop-plein de la chambre de rétention vers le tronçon aval, ce qui évite l'accumulation d'un fluide potentiellement inflammable dans le tronçon amont et améliore la sécurité. Lorsque la deuxième ouverture n'est plus obturée, il se produit un écoulement gravitaire du contenu de la chambre de rétention, via la deuxième ouverture, vers le tronçon aval.

La conduite de drainage comprend une première paroi tubulaire formant le tronçon amont, une deuxième paroi tubulaire formant le tronçon aval, la première paroi tubulaire et la deuxième paroi tubulaire s'emboîtant l'une dans l'autre.

Par « formant », on comprend que les première et deuxième parois tubulaires forment au moins les tronçons amont et aval, respectivement. En effet, comme il sera détaillé par la suite, les parois tubulaires également peuvent former d'autres parties, par exemple la chambre de rétention. Grâce au fait que la première paroi tubulaire et la deuxième paroi tubulaire s'emboîtent l'une dans l'autre, la conduite de drainage présente une meilleure compacité.

Dans certains modes de réalisation, la première paroi tubulaire et la deuxième paroi tubulaire s'emboîtent l'une dans l'autre pour former la chambre de rétention. Ainsi, la chambre de rétention peut être formée entre les première et deuxième parois tubulaires, ou bien à l'intérieur d'une seule paroi tubulaire, dans la portion entourée par l'autre paroi tubulaire. Par exemple, la chambre de rétention peut être formée par la première paroi tubulaire, dans le prolongement du tronçon amont, dans une portion où la deuxième paroi tubulaire entoure la première paroi tubulaire.

Dans certains modes de réalisation, la première paroi tubulaire et la deuxième paroi tubulaire sont coaxiales.

Dans certains modes de réalisation, l'obturateur est monté dans un orifice de la première paroi et un orifice de la deuxième paroi, en vis-à-vis l'un de l'autre. L'orifice de la première paroi et l'orifice de la deuxième paroi se font face, ce qui permet le montage de l'obturateur à travers ces parois. L'orifice de la première ou deuxième paroi peut, selon les cas, faire office de deuxième ouverture pour la communication entre la chambre de rétention et le tronçon aval. Dans ces modes de réalisation, l'installation de l'obturateur est facilitée.

Dans certains modes de réalisation, l'obturateur est monté démontable. Ceci permet de le retirer, par exemple pour le nettoyer, le réparer ou le remplacer, ou nettoyer le reste de la conduite de drainage.

Le présent exposé concerne également un ensemble de drainage comprenant au moins deux parties de conduite de drainage telles que précédemment décrites, dont les tronçons aval respectifs débouchent directement ou indirectement sur une conduite de drainage commune. Par exemple, les tronçons aval respectifs peuvent déboucher sur des conduites de drainage qui se rejoignent en une conduite de drainage commune. La conduite de drainage commune peut être destinée à déboucher sur une zone de récupération dont le contenu peut être observé. On comprend donc que les chambres de rétention sont disposées en amont du ou des conduites de drainage communes. Il peut être prévu, en effet, plusieurs conduites de drainage communes successivement regroupées, se déployant selon une structure en arbre. Comme expliqué précédemment, les parties de conduite de drainage précitées permettent de diagnostiquer efficacement une fuite malgré la présence d'une conduite de drainage commune, tandis que la conduite de drainage commune apporte des avantages en termes de masse, d'intégration et de simplicité du système de drainage.

Le présent exposé concerne également une turbomachine, notamment une turbomachine d'aéronef, comprenant une conduite de drainage ou un ensemble de drainage tel que précédemment décrit.

Le présent exposé concerne également un procédé de détection de fuite sur une turbomachine comprenant un ensemble de drainage tel que précédemment décrit, comprenant les étapes suivantes pour au moins une partie des parties de conduite de drainage :
- obturer les deuxièmes ouvertures respectives, au besoin en actionnant les obturateurs correspondants ;
- après une durée prédéterminée, actionner successivement au moins une partie des obturateurs respectifs des parties de conduite de drainage de sorte que les obturateurs n'obturent pas les deuxièmes ouvertures correspondantes.

Par « respectif » et « correspondant », on se réfère à des parties d'une même conduite de drainage.

On comprend que, pour appliquer ce procédé, on peut ne considérer qu'une partie des conduites de drainage de l'ensemble de drainage, notamment si l'on a préalablement écarté la défaillance de certains composants.

En obturant toutes les deuxièmes ouvertures respectives des parties de conduite considérées, certaines des chambres de rétention peuvent se remplir en cas de fuite du composant auquel elles sont reliées par le tronçon amont. Le fait d'actionner successivement les obturateurs respectifs des parties de conduite de drainage, implicitement dans le sens d'une ouverture de la deuxième ouverture correspondante puisque la deuxième ouverture était précédemment obturée, permet l'écoulement de fluide depuis la chambre de rétention correspondante vers le tronçon aval puis la conduite de drainage commune. Ainsi, en observant la correspondance entre l'actionnement d'un obturateur et l'écoulement de fluide en sortie du drain commun, il est possible de déterminer facilement et rapidement quel composant fuit.

A l'étape d'obturation, il n'est pas nécessaire d'actionner les obturateurs qui obturent déjà la deuxième ouverture correspondante.

Par ailleurs, il est possible d'arrêter l'étape d'actionnement dès qu'on a trouvé quel composant fuit, sans actionner les obturateurs des composants restants.

### BRÈVE DESCRIPTION DES DESSINS

L'invention et ses avantages seront mieux compris à la lecture de la description détaillée qui suit, de modes de réalisation donnés à titre d'exemples non limitatifs. Cette description se réfère aux dessins annexés, sur lesquels :
- la figure 1 représente, en coupe longitudinale, une conduite de drainage selon un premier mode de réalisation ;
- la figure 2 illustre, en coupe longitudinale, une première variante de la conduite de drainage selon le premier mode de réalisation ;
- la figure 3 illustre, en coupe longitudinale, une deuxième variante de la conduite de drainage selon le premier mode de réalisation ;
- la figure 4 représente schématiquement une conduite de drainage selon un deuxième mode de réalisation ;
- les figures 5A et 5B illustrent, en coupe longitudinale, une variante d'obturateur, ici en référence au premier mode de réalisation ;
- les figures 6A, 6B, 6C, 6D représentent schématiquement un ensemble de drainage et les étapes d'un procédé de détection de fuite selon un mode de réalisation.

### DESCRIPTION DÉTAILLÉE DE MODES DE RÉALISATION

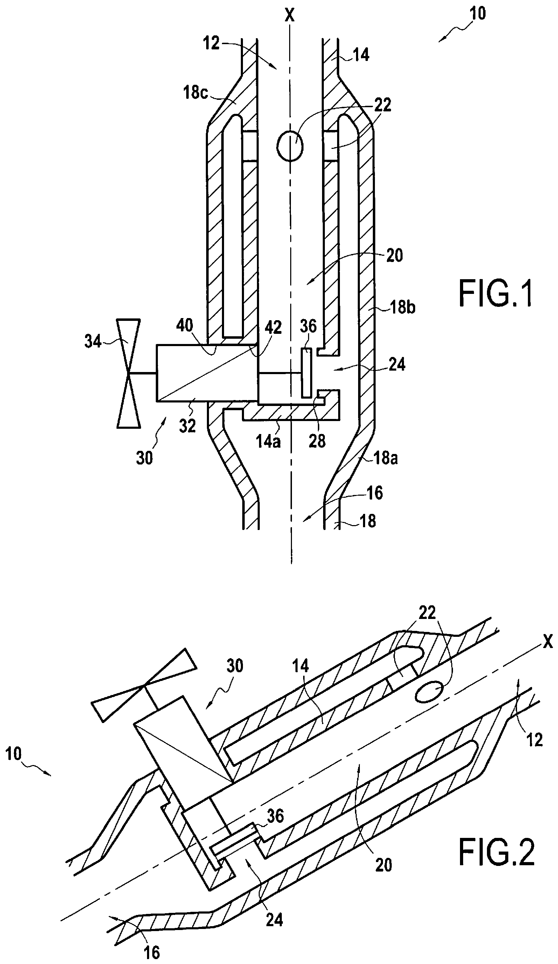

Une partie de conduite de drainage, ou conduite de drainage, selon un premier mode de réalisation est présentée en référence à la figure 1, qui en illustre une coupe longitudinale. Une telle conduite de drainage est apte à être montée sur une turbomachine d'aéronef afin de recueillir les fuites de fluide éventuelles émanant d'un composant.

La conduite de drainage 10 comprend un tronçon amont 12 et un tronçon aval 16. En l'espèce, le tronçon amont 12 est formé par une première paroi tubulaire 14, tandis que le tronçon aval 16 est formé par une deuxième paroi tubulaire 18. Les parois tubulaires 14, 18 sont ici à section circulaire mais pourraient avoir d'autres formes de section et/ou des sections différentes l'une de l'autre. En l'espèce, les parois tubulaires 14, 18 sont coaxiales autour d'un axe longitudinal X, ici droit mais pouvant être courbe ou en ligne brisée, par exemple si la conduite de drainage forme un coude.

Le tronçon aval 16 est fixe par rapport au tronçon amont 12, ici grâce au fait que ces tronçons 12, 16 sont assemblés fixement, sans possibilité de mouvement, l'un à l'autre. Plus précisément, les parois tubulaires 14, 18 sont ici formées en une seule pièce, pouvant être fabriquée par fabrication additive.

Comme il ressort de la figure 1, les parois tubulaires 14, 18 s'emboîtent l'une dans l'autre. En effet, les parois tubulaires 14, 18 se chevauchent dans une direction radiale (perpendiculaire à l'axe longitudinal X et passant par cet axe). Ici, la première paroi tubulaire 14 est sensiblement cylindrique, c'est-à-dire de section sensiblement constante transversalement à l'axe longitudinal X. La deuxième paroi tubulaire 18 présente, en se rapprochant de la première paroi tubulaire 14, un évasement 18a, de section croissante, résultant en une section élargie 18b de la deuxième paroi 18. La première paroi tubulaire 14 est entourée par la section élargie 18b. La section élargie 18b se prolonge, à l'opposé de l'évasement 18a, par une partie effilée 18c, de section décroissante, permettant la jonction entre la première paroi tubulaire 14 et la deuxième paroi tubulaire 18.

Comme illustré sur la figure 1, dans ce mode de réalisation, la première paroi tubulaire 14, en amont de la jonction avec la deuxième paroi tubulaire 18, est dans le prolongement de la deuxième paroi tubulaire 18 en aval de l'évasement 18a, ce qui assure à la conduite de drainage 10 une bonne compacité.

La conduite de drainage 10 comprend également une chambre de rétention 20. Le tronçon amont 12 débouche sur la chambre de rétention 20, ici grâce au fait que la chambre de rétention 20 est formée à l'intérieur de la première paroi tubulaire 14, par exemple dans le prolongement du tronçon amont 12. A fortiori, la chambre de rétention 20 est à l'intérieur de la deuxième paroi tubulaire 18. La première paroi tubulaire 14 se termine, dans la direction aval, par une paroi de fond 14a, transverse. Plus généralement, comme on le voit sur la figure 1, la totalité du fluide s'écoulant dans le tronçon amont 12 est dirigée par écoulement gravitaire vers la chambre de rétention 20.

Comme indiqué précédemment, la conduite de drainage 10 présente au moins une première ouverture 22 et au moins une deuxième ouverture 24 pour la communication fluidique entre la chambre de rétention 20 et le tronçon aval 16. En l'espèce, la conduite de drainage présente une pluralité de premières ouvertures 22 dont trois sont représentées sur la vue de la figure 1, régulièrement réparties circonférentiellement, et une unique deuxième ouverture 24. Par souci de concision, on parlera toutefois par la suite d'une première ouverture 22 et d'une deuxième ouverture 24, sans perte de généralité. En outre, le nombre et la disposition des premières et deuxièmes ouvertures peuvent varier.

La première ouverture 22 est ici disposée plus en amont que la deuxième ouverture 24. En d'autres termes, la première ouverture 22 est plus proche du tronçon amont 12 que la deuxième ouverture 24. Par ailleurs, la deuxième ouverture 24 est plus proche du tronçon aval 16 que la première ouverture 22.

Dans cet exemple, la première ouverture 22 et la deuxième ouverture 24 sont ménagées dans la première paroi tubulaire 14, plus précisément dans la partie de la première paroi tubulaire 14 séparant la chambre de rétention 20 du tronçon aval 16. Les première et deuxième ouvertures 22, 24 sont ici de section circulaire et orientées radialement, mais d'autres sections ou orientations sont possibles. Ainsi, comme illustré, le fluide provenant du tronçon amont 12 est contraint de passer soit par la première ouverture 22, soit par la deuxième ouverture 24 pour rejoindre le tronçon aval 16.

De plus, la conduite de drainage 10 comprend un obturateur 30. L'obturateur 30 est configuré pour obturer la deuxième ouverture 24. Dans le cas de plusieurs deuxièmes ouvertures 24, il peut être prévu un obturateur permettant de les obturer toutes ou une pluralité d'obturateurs, ladite pluralité étant configurée pour obturer toutes les deuxièmes ouvertures 24.

Dans cet exemple, l'obturateur 30 se présente sous la forme d'un robinet et comprend un corps 32 ainsi qu'un un organe de commande 34. L'organe de commande 34 est accessible depuis l'extérieur de la conduite de drainage 10, de sorte qu'un opérateur puisse le manipuler. L'organe de commande 34 commande, via un mécanisme prévu dans le corps et connu en soi, le mouvement d'un clapet 36, ici de façon à rapprocher ou éloigner le clapet 36 de la deuxième ouverture 24. Le pourtour de la deuxième ouverture 24 forme un siège 28 apte à coopérer avec le clapet 36 pour l'obturation de la deuxième ouverture 24. Le clapet 36 est ici mobile à l'intérieur de la chambre de rétention 20.

L'obturateur 30 est monté dans un orifice 42 de la première paroi tubulaire 14 et un orifice 40 de la deuxième paroi tubulaire 18. Les orifices 40, 42 sont en vis-à-vis l'un de l'autre pour faciliter le montage de l'obturateur 30, voire son retrait lorsque l'obturateur 30 est monté démontable. Ici, les orifices 40, 42 sont prévus diamétralement opposés à la deuxième ouverture 24. Plus généralement, l'obturateur 30 est ici monté face à la deuxième ouverture 24.

L'obturateur 30 peut être monté dans les orifices 40, 42 par vissage. Dans le cas présent, vu la configuration de l'obturateur 30, une indexation de positionnement angulaire n'est pas nécessaire, toutefois elle pourrait être prévue.

La conduite de drainage 10 peut être destinée à être installée sur une turbomachine d'aéronef sensiblement dans l'orientation illustrée sur la figure 1. Dans cette orientation, comme on le voit sur la figure 1, la deuxième ouverture 24 est disposée de façon à permettre, lorsque l'obturateur 30 ne l'obture pas, la vidange de la chambre de rétention 20. L'orientation de la conduite de drainage 10 peut être prévue pour faciliter l'écoulement du fluide du tronçon amont 12 vers le tronçon aval 16, via la chambre de rétention 20, compte tenu du fait que l'écoulement est essentiellement entraîné par la gravité.

Plus généralement, lorsque l'obturateur 30 obture la deuxième ouverture 24, la chambre de rétention 20 ne communique avec le tronçon aval 16 que par la première ouverture 22. Par suite, la chambre de rétention 20 est apte à retenir du fluide, à savoir les fuites provenant du tronçon amont, dans l'espace qui s'étend entre la première ouverture 22 et la deuxième ouverture 24. Les première et deuxième ouvertures 22, 24 sont donc espacées l'une de l'autre dans la direction de la gravité. En outre, le fluide peut s'écouler du tronçon amont 12 vers le tronçon aval 16 par la première ouverture 22, qui fait office de trop-plein pour la chambre de rétention 20. Comme illustré sur la figure 1, le canal de trop-plein reliant la première ouverture 22 au tronçon aval 16 en contournant la deuxième ouverture 24, qui permet au trop-plein de fluide de s'écouler lorsque la chambre de rétention 20 est remplie, est dépourvu d'élément d'obturation ou de rétention de fluide. En d'autres termes, le canal de trop-plein est inapte à retenir du fluide. La fonction d'évacuation de trop-plein vers le tronçon aval 16 peut donc être assurée par ledit canal avec fiabilité et avec un encombrement minimum du fait de l'absence de volume de rétention de fluide dans ce canal. Comme il ressort également de la figure 1, le canal de trop-plein a une paroi commune avec la chambre de rétention 20, en l'occurrence la première paroi tubulaire 14. Cette disposition améliore la relative compacité de la partie de conduite de drainage 10 qui inclut la chambre de rétention 20.

Lorsque l'obturateur 30 n'obture pas la deuxième ouverture 24, ce qui correspond à la configuration illustrée sur la figure 1, le fluide peut s'écouler du tronçon amont 12 vers le tronçon aval 16 au moins par la deuxième ouverture 24. En l'occurrence, si la deuxième ouverture 24 est sous-dimensionnée par rapport au débit de fuite provenant du tronçon amont 12, le fluide peut s'écouler vers le tronçon aval 14 également par la première ouverture 22.

L'utilisation de ce fonctionnement dans le cadre d'un procédé de détection de fuites sera détaillée par la suite.

Les figures 2 à 5B présentent une conduite de drainage selon des variantes ou d'autres modes de réalisation. Sur ces figures, les éléments correspondant ou identiques à ceux du premier mode de réalisation recevront le même signe de référence et ne seront pas décrits à nouveau.

La figure 2 illustre, en coupe longitudinale, une conduite de drainage 10 selon une première variante, similaire à celle de la figure 1 mais configurée pour être montée selon une autre orientation. Au lieu d'être sensiblement vertical, l'axe longitudinal X forme un angle d'environ 45° avec la direction verticale. Afin de maximiser le volume de fluide pouvant être retenu dans la chambre de rétention 20, les premières ouvertures 22 ne sont pas régulièrement réparties sur le pourtour de la première paroi 14, mais prévues dans une partie la plus haute, dans la direction verticale (direction de la gravité), d'un segment amont de la chambre de rétention 20. Suivant le même principe, de manière indépendante, la deuxième ouverture 24 peut être prévue dans une partie la plus basse, dans la direction verticale, d'un segment aval de la chambre de rétention 20.

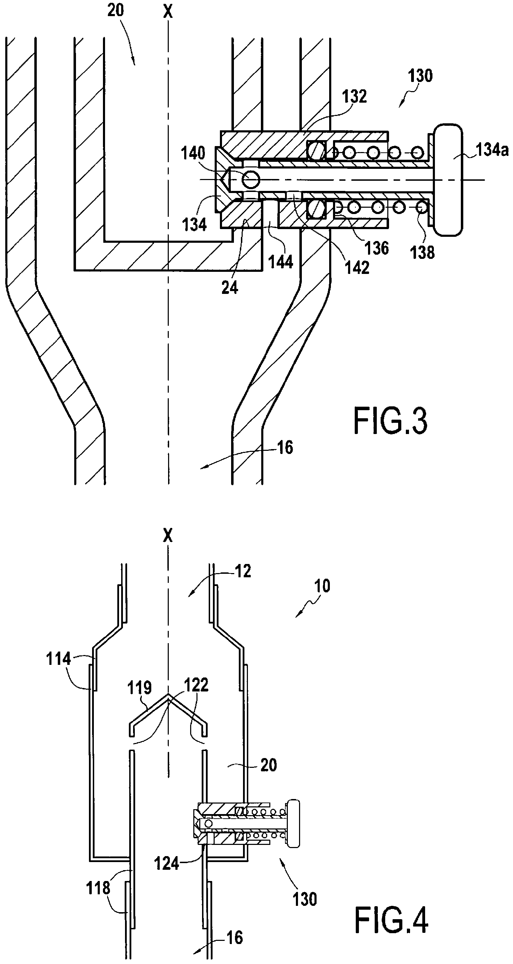

La figure 3 illustre, en coupe longitudinale, une conduite de drainage 10 selon une deuxième variante, similaire au mode de réalisation de la figure 1 mais présentant un obturateur 130 différent.

L'obturateur 130 selon cette variante comprend un corps 132 et un clapet 134 coulissant par rapport au corps. Le clapet 134 est solidaire d'un bouton poussoir 134a, formant organe de commande, pour sa mise en mouvement. Le maintien du clapet 134 en position d'obturation de la deuxième ouverture 24 est assuré par des moyens de rappel, ici un ressort 138 monté en compression entre un épaulement 136 du corps 132 et le bouton poussoir 134a. Le clapet 134 se présente sous la forme d'une tige creuse présentant une ou plusieurs premières lumières 140, à son extrémité opposée au bouton poussoir 134a, et une ou plusieurs deuxièmes lumières 142, entre les premières lumières 140 et le bouton poussoir 134a. Dans la position du clapet 134 illustrée sur la figure 3, l'obturateur 30 obture la deuxième ouverture 24. En appuyant sur le bouton poussoir 134a, le clapet 134 coulisse de sorte que les premières lumières 140 soient en communication fluidique avec la chambre de rétention 20, et que la deuxième lumière 142 soit en communication fluidique avec le tronçon aval 16, par exemple grâce à la mise en correspondance de la deuxième lumière 142 avec un orifice 144 du corps 132 débouchant sur le tronçon aval 16.

Par rapport à l'obturateur 30 précédemment décrit, l'obturateur 130 selon cette deuxième variante présente l'avantage que le siège du clapet 134 est intégré au corps 132. Ainsi, lorsque l'obturateur 130 est démontable, il est possible de vérifier son fonctionnement et son étanchéité, voire de le nettoyer, indépendamment de la conduite de drainage 10.

En outre, cela évite de prévoir les orifices 40, 42 du premier mode de réalisation, puisqu'il suffit ici d'un orifice dans la deuxième paroi faisant face à la deuxième ouverture 24. Cette variante illustre le fait que l'obturateur 130 est monté dans un orifice de la première paroi 14 et un orifice de la deuxième paroi 18, en vis-à-vis l'un de l'autre, mais dans cette variante, contrairement aux modes de réalisation précédente, l'orifice de la première paroi 14 fait office de deuxième ouverture 24.

Une conduite de drainage selon un deuxième mode de réalisation est schématiquement représentée, en coupe longitudinale, sur la figure 4.

Dans ce mode de réalisation, la conduite de drainage 10 comprend une première paroi tubulaire 114 formant le tronçon amont 12, une deuxième paroi tubulaire 118 formant le tronçon aval 16, la première paroi tubulaire 114 et la deuxième paroi tubulaire 118 s'emboîtant l'une dans l'autre. Toutefois, par opposition au premier mode de réalisation, c'est la deuxième paroi tubulaire 118 qui s'emboîte dans la première paroi tubulaire 114. Ainsi, la première paroi tubulaire 114 présente un évasement et une section élargie, de façon à entourer la deuxième paroi tubulaire 118. La deuxième paroi tubulaire 118, quant à elle, présente une section sensiblement constante le long de l'axe longitudinal X.

La chambre de rétention 20 est formée à l'intérieur de la première paroi tubulaire 114, plus précisément entre les première et deuxième parois tubulaires 114, 118. Par suite, contrairement au premier mode de réalisation, la chambre de rétention 20 est formée à l'extérieur de la deuxième paroi tubulaire 118. Ici, la chambre de rétention 20 est annulaire autour de l'axe X, mais d'autres formes pourraient être envisagées. Quoi qu'il en soit, la première paroi tubulaire 114 et la deuxième paroi tubulaire 118 sont coaxiales dans cet exemple également.

La deuxième paroi tubulaire 118 peut présenter une section terminale 119 de type conique ou équivalent pour faciliter l'écoulement du fluide sur les côtés du tronçon aval 16, dans la chambre de rétention 20.

Comme il ressort de la figure 4, chaque paroi tubulaire peut comprendre plusieurs segments, notamment plusieurs segments tubulaires assemblés les uns aux autres, par exemple soudés. Cela permet de mettre en œuvre des techniques de fabrication classiques, sans nécessairement faire appel à la fabrication additive.

Les premières ouvertures 122 et la deuxième ouverture 124 sont ici aussi prévues pour faire communiquer la chambre de rétention 20 et le tronçon aval 16. Dans ce mode de réalisation, cela implique que les premières ouvertures 122 et la deuxième ouverture 124 sont formées dans la deuxième paroi tubulaire 118. En outre, malgré l'inversion des première et deuxième parois tubulaires 114, 118 par rapport au premier mode de réalisation, ce deuxième mode de réalisation reste tel qu'une première ouverture 122 est plus proche du tronçon amont 12 que la deuxième ouverture 124, et la deuxième ouverture 124 est plus proche du tronçon aval 16 qu'une première ouverture 122.

Sur la figure 4, on a représenté un obturateur 130 identique à celui de la figure 3, toutefois d'autres types d'obturateurs pourraient être utilisés, au besoin en ménageant les orifices nécessaires dans les première et deuxième parois tubulaires 114, 118.

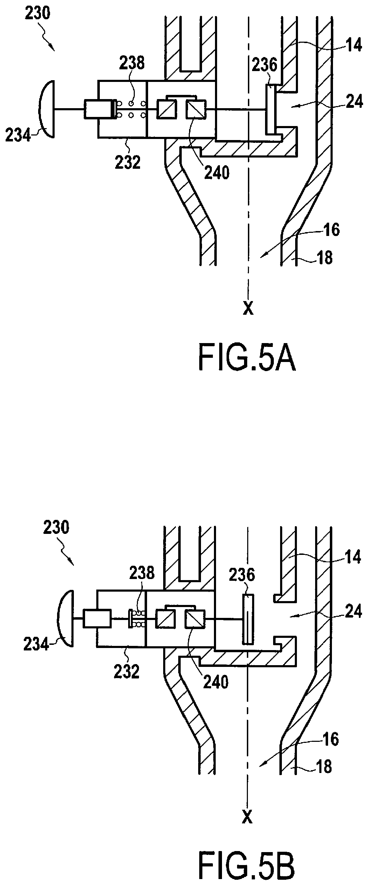

Par exemple, les figures 5A et 5B illustrent, en coupe longitudinale, une variante d'obturateur, ici en référence au premier mode de réalisation.

L'obturateur 230 selon cette variante comprend un corps 232 ainsi qu'un un organe de commande 234, en l'occurrence un bouton-poussoir. L'organe de commande 234 est accessible depuis l'extérieur de la conduite de drainage 10. L'organe de commande 234 commande, via un mécanisme 240 prévu dans le corps 232, le mouvement d'un clapet 236, ici de façon à rapprocher ou éloigner le clapet 236 de la deuxième ouverture 24. Le mécanisme 240 est configuré pour transmettre en sens contraire le mouvement de l'organe de commande 234 au clapet 236. A cette fin, le mécanisme 240 peut comprendre un doublet de liaisons hélicoïdales à filets inversés. Ainsi, l'obturateur 230 se trouve normalement dans la position illustrée sur la figure 5A et lorsque l'organe de commande 234 est poussé, le clapet 236 est rétracté (voir figure 5B).

Par ailleurs, le maintien du clapet 234 en position d'obturation de la deuxième ouverture 24 est assuré par des moyens de rappel, ici un ressort 238 monté en compression entre un épaulement du corps 132 et l'organe de commande 234.

La configuration des première et deuxième parois tubulaires 14, 18 est similaire à celle du premier mode de réalisation.

D'autres variantes d'obturateur sont encore possibles, par exemple un obturateur utilisant un système d'aimants et ressort pour maintenir le clapet dans une position d'ouverture ou d'obturation de la deuxième ouverture.

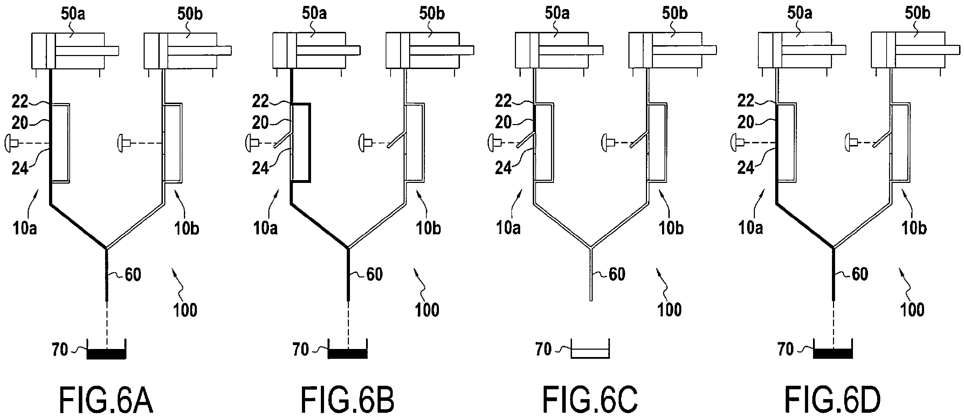

Un procédé de détection de fuite selon un mode de réalisation va maintenant être décrit en référence aux figures 6A à 6D, qui en illustrent schématiquement les étapes.

On a représenté sur ces figures un ensemble de drainage 100 comprenant au moins deux conduites de drainage 10a, 10b, par exemple selon l'un des modes de réalisation précédemment décrit, et dont les tronçons aval respectifs débouchent sur un drain commun 60. Sur la conduite de drainage 10a, on a repéré l'emplacement des première et deuxième ouvertures 22, 24 ainsi que de la chambre de rétention 20, ici schématisées.

Les conduites de drainage 10a, 10b sont configurées pour récupérer les fuites émanant de composants d'une turbomachine, ici représentés respectivement comme des vérins hydrauliques 50a, 50b. Les obturateurs respectifs des conduites de drainage 10a, 10b sont représentés avec la convention schématique des interrupteurs électriques.

Sur la figure 6A, la turbomachine est supposée en fonctionnement et on constate que le vérin 50a fuit (conduite noircie sur la figure 6A). La fuite est récupérée par la conduite de drainage 10a, qui la dirige vers le drain commun 60 puis vers une zone de récupération 70 dont le contenu peut être observé. Un opérateur observe une fuite par le drain commun 60 mais ne sait pas déterminer, à ce stade, de quel composant la fuite provient.

Constatant une fuite, on obture les deuxièmes ouvertures respectives des conduites de drainage 10a, 10b, au besoin en actionnant les obturateurs à cette fin. La situation obtenue est illustrée sur la figure 6B. Comme on peut le voir sur cette figure, la chambre de rétention 20 est alors apte à retenir du fluide entre la première ouverture 22 et la deuxième ouverture 24 et le fluide peut s'écouler du tronçon amont vers le tronçon aval par la première ouverture 22, qui fait office de trop-plein pour contourner la deuxième ouverture 24 obturée par l'obturateur.

On arrête ensuite la turbomachine, à la suite de quoi la fuite au niveau du vérin 50a cesse. On attend une durée prédéterminée nécessaire à l'écoulement du fluide à travers les conduites de drainage 10a, 10b et jusqu'à la zone de récupération 70, à l'exception du fluide potentiellement contenu dans les chambres de rétention 20 respectives. Cet état est représenté sur la figure 6C. En outre, à cette étape, comme illustré, il est possible de purger la zone de récupération 70 pour faciliter la détection qui va suivre.

Comme illustré sur la figure 6D, on actionne ensuite successivement les obturateurs respectifs des conduites de drainage 10a, 10b de sorte que les obturateurs n'obturent pas les deuxièmes ouvertures correspondantes. Sur la figure 6D, l'obturateur de la conduite de drainage 10a a été actionné, ce qui induit l'écoulement du fluide depuis la chambre de rétention correspondante jusqu'à la zone de récupération 70. L'obturateur de la conduite de drainage 10b obturant toujours la deuxième ouverture correspondante, l'opérateur peut en conclure que la fuite de fluide provient du composant relié à la conduite de drainage 10a, c'est-à-dire en l'occurrence du vérin 50a.

Ainsi, une fuite peut être détectée rapidement et simplement.

Après détection d'une fuite du vérin 50a, il est possible d'arrêter les opérations de détection, le composant défectueux ayant été identifié. Alternativement, la détection peut être poursuivie en actionnant successivement d'autres obturateurs, dans le but de permettre l'écoulement depuis d'autres chambres de rétention et potentiellement détecter d'autres composants défectueux.

L'étape représentée sur la figure 6A n'est pas nécessaire si les obturateurs se trouvent déjà dans la position de la figure 6B, c'est-à-dire obturant les deuxièmes ouvertures correspondantes.

Par ailleurs, l'organe de commande d'un obturateur configuré pour obturer la deuxième ouverture, tel que les obturateurs 30, 130, et 230 décrits dans ce qui précède, peut être accouplé à un actionneur commandé à distance. Par exemple, l'actionneur peut être à commande électrique déportée, en étant relié à un calculateur de la turbomachine par exemple par une liaison filaire ou par ondes radio. Ainsi, dans un ensemble de drainage 100 comprenant au moins deux parties de conduite de drainage conformes au présent exposé, à supposer que les organes de commande de tous les obturateurs soient accouplés chacun à un actionneur, la détection de fuite telle que par exemple réalisée selon le procédé décrit en référence aux figures 6A à 6D peut être effectuée sans avoir besoin d'ouvrir des capots qui délimitent un compartiment dans lequel est disposé l'ensemble de drainage 100. Le processus d'obturation sélective des obturateurs suivi d'une ouverture après une durée prédéterminée peut être ainsi commandé automatiquement par un calculateur de la turbomachine, par exemple sur ordre de l'opérateur chargé d'observer une fuite par le drain commun 60.

Bien que la présente description se réfère à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Partie de conduite de drainage (10) d'un fluide pour une turbomachine d'aéronef, comprenant un tronçon amont (12), un tronçon aval (16) fixe par rapport au tronçon amont (12) et une chambre de rétention (20) sur laquelle le tronçon amont (12) débouche, la chambre de rétention (20) étant apte à communiquer avec le tronçon aval (16) par au moins une première ouverture (22, 122) et au moins une deuxième ouverture (24, 124) prévue de sorte à être disposée plus bas que la première ouverture lors du fonctionnement de la turbomachine, la chambre de rétention (20) étant disposée de telle sorte que le fluide provenant du tronçon amont (12) s'écoule par écoulement gravitaire vers la chambre de rétention (20), la partie de conduite de drainage comprenant en outre un obturateur (30, 130, 230) configuré pour obturer la deuxième ouverture (24, 124), les première et deuxième ouvertures (22, 122, 24, 124) étant prévues de sorte que lorsque l'obturateur (30, 130, 230) obture la deuxième ouverture (24, 124), la chambre de rétention (20) est apte à retenir du fluide en permettant à un trop-plein de fluide de s'écouler du tronçon amont (12) vers le tronçon aval (16) par la première ouverture (22, 122), et lorsque l'obturateur (30, 130, 230) n'obture pas la deuxième ouverture (24, 124), le fluide peut s'écouler du tronçon amont (12) vers le tronçon aval (16) au moins par la deuxième ouverture (24, 124), **caractérisée par**
la partie de conduite de drainage comprenant une première paroi tubulaire (14, 114) formant le tronçon amont (12), une deuxième paroi tubulaire (18, 118) formant le tronçon aval (16), la première paroi tubulaire (14, 114) et la deuxième paroi tubulaire (18, 118) s'emboîtant l'une dans l'autre.

2. Partie de conduite de drainage (10) selon la revendication 1, dans laquelle l'obturateur (30, 130, 230) comprend un clapet (36, 134, 236) dont un organe de commande (34, 134a, 234) est accessible depuis l'extérieur de la partie de conduite de drainage.

3. Partie de conduite de drainage (10) selon la revendication 1 ou 2, la deuxième ouverture (24, 124) étant disposée de façon à permettre, lorsque l'obturateur (30, 130, 230) ne l'obture pas, de faire communiquer la chambre de rétention (20) avec le tronçon aval (16).

4. Partie de conduite de drainage (10) selon l'une quelconque des revendications 1 à 3, dans laquelle la première ouverture (22, 122) est plus proche du tronçon amont (12) que la deuxième ouverture (24, 124), et/ou la deuxième ouverture (24, 124) est plus proche du tronçon aval (16) que la première ouverture (22, 122).

5. Partie de conduite de drainage (10) selon l'une quelconque des revendications 1 à 4, dans laquelle la première paroi tubulaire (14, 114) et la deuxième paroi tubulaire (18, 118) sont coaxiales.

6. Partie de conduite de drainage (10) selon l'une quelconque des revendications 1 à 5, dans laquelle l'obturateur (30, 130, 230) est monté dans un orifice (24, 42) de la première paroi (14, 114) et un orifice de la deuxième paroi (40), en vis-à-vis l'un de l'autre.

7. Partie de conduite de drainage (10) selon l'une quelconque des revendications 1 à 6, dans laquelle l'obturateur (30, 130, 230) est monté démontable.

8. Ensemble de drainage (100) comprenant au moins deux parties de conduite de drainage (10a, 10b) selon l'une quelconque des revendications 1 à 7, dont les tronçons aval (16) respectifs débouchent sur des conduites de drainage qui se rejoignent en une conduite de drainage commune (60) destinée à déboucher sur une zone de récupération (70) dont le contenu peut être observé.

9. Procédé de détection de fuite sur une turbomachine munie d'un ensemble de drainage (100) selon la revendication 8, comprenant les étapes suivantes pour au moins une partie des parties de conduite de drainage :
- obturer les deuxièmes ouvertures (24, 124) respectives, au besoin en actionnant les obturateurs (30, 130, 230) correspondants ;
- après une durée prédéterminée, actionner successivement les obturateurs (30, 130, 230) respectifs des parties de conduite de drainage (10a, 10b) de sorte que les obturateurs n'obturent pas les deuxièmes ouvertures (24, 124) correspondantes.

## Patentansprüche

1. Drainageleitungsteil (10) eines Fluids für eine Turbomaschine eines Fluggeräts, umfassend einen stromaufwärtigen Abschnitt (12), einen in Bezug auf den stromaufwärtigen Abschnitt (12) festen stromabwärtigen Abschnitt (16) und eine Rückhaltekammer (20), auf der der stromaufwärtige Abschnitt (12) ausmündet, wobei die Rückhaltekammer (20) imstande ist, mit dem stromabwärtigen Abschnitt (16) durch mindestens eine erste Öffnung (22, 122) und mindestens eine zweite Öffnung (24, 124) zu kommunizieren, die derart vorgesehen ist, dass sie beim Betrieb der Turbomaschine niedriger als die erste Öffnung angeordnet ist, wobei die Rückhaltekammer (20) derart angeordnet ist, dass das vom stromaufwärtigen Abschnitt (12) kommende Fluid durch Schwerkraft zur Rückhaltekammer (20) fließt, wobei der Drainageleitungsteil ferner einen Verschluss (30, 130, 230) umfasst, der zum Verschließen der zweiten Öffnung (24, 124) ausgelegt ist, wobei die erste und zweite Öffnungen (22, 122, 24, 124) derart vorgesehen sind, dass, wenn der Verschluss (30, 130, 230) die zweite Öffnung (24, 124) verschließt, die Rückhaltekammer (20) imstande ist, Fluid zurückzuhalten, indem sie einem Überlauf an Fluid gestatteten, vom stromaufwärtigen Abschnitt (12) zum stromabwärtigen Abschnitt (16) durch die erste Öffnung (22, 122) abzufließen, und wenn der Verschluss (30, 130, 230) die zweite Öffnung (24, 124) nicht verschließt, das Fluid vom stromaufwärtigen Abschnitt (12) zum stromabwärtigen Abschnitt (16) mindestens durch die zweite Öffnung (24, 124) abfließen kann, **dadurch gekennzeichnet, dass** der Drainageleitungsteil eine erste rohrförmige Wand (14, 114) umfasst, die den stromaufwärtigen Abschnitt (12) bildet, eine zweite rohrförmige Wand (18, 118), die den stromabwärtigen Abschnitt (16) bildet, wobei die erste rohrförmige Wand (14, 114) und die zweite rohrförmige Wand (18, 118) ineinander einrasten.

2. Drainageleitungsteil (10) nach Anspruch 1, wobei der Verschluss (30, 130, 230) ein Ventil (36, 134, 236) umfasst, von dem ein Steuerorgan (34, 134a, 234) von außerhalb des Drainageleitungsteils erreichbar ist.

3. Drainageleitungsteil (10) nach Anspruch 1 oder 2, wobei die zweite Öffnung (24, 124) derart angeordnet ist, dass sie, wenn sie der Verschluss (30, 130, 230) nicht verschließt, die Rückhaltekammer (20) mit dem stromabwärtigen Abschnitt (16) in Kommunikation versetzt.

4. Drainageleitungsteil (10) nach einem der Ansprüche 1 bis 3, wobei die erste Öffnung (22, 122) näher am stromaufwärtigen Abschnitt (12) ist als die zweite Öffnung (24, 124), und/oder die zweite Öffnung (24, 124) näher am stromabwärtigen Abschnitt (16) ist als die erste Öffnung (22, 122).

5. Drainageleitungsteil (10) nach einem der Ansprüche 1 bis 4, wobei die erste rohrförmige Wand (14, 114) und die zweite rohrförmige Wand (18, 118) koaxial sind.

6. Drainageleitungsteil (10) nach einem der Ansprüche 1 bis 5, wobei der Verschluss (30, 130, 230) in einem Durchbruch (24, 42) der ersten Wand (14, 114) und in einem Durchbruch der zweiten Wand (40) einander gegenüber angebracht ist.

7. Drainageleitungsteil (10) nach einem der Ansprüche 1 bis 6, wobei der Verschluss (30, 130, 230) demontierbar angebracht ist.

8. Drainageeinheit (100), umfassend mindestens zwei Drainageleitungsteile (10a, 10b) nach einem der Ansprüche 1 bis 7, deren jeweilige stromabwärtige Abschnitte (16) auf Drainageleitungen ausmünden, die sich in einer gemeinsamen Drainageleitung (60) treffen, die bestimmt ist, auf einer Rückgewinnungszone (70) auszumünden, deren Inhalt beobachtbar ist.

9. Verfahren zur Ermittlung eines Lecks bei einer Turbomaschine, die mit einer Drainageeinheit (100) nach Anspruch 8 ausgestattet ist, umfassend die folgenden Schritte für mindestens einen Teil der Drainageleitungsteile:
- Verschließen der jeweiligen zweiten Öffnungen (24, 124) nach Bedarf durch Betätigung der entsprechenden Verschlüsse (30, 130, 230);
- nach einer vorher festgelegten Dauer, aufeinanderfolgende Betätigung der jeweiligen Verschlüsse (30, 130, 230) der Drainageleitungsteile (10a, 10b), so dass die Verschlüsse die entsprechenden zweiten Öffnungen (24, 124) nicht verschließen.

## Claims

1. A portion of a fluid drainage conduit (10) for an aircraft turbomachine, comprising an upstream stretch (12), a downstream stretch (16) fixed relative to the upstream stretch (12) and a retention chamber (20) onto which the upstream stretch (12) opens, the retention chamber (20) being capable of communicating with the downstream stretch (16) through at least one first aperture (22, 122) and at least one second aperture (24, 124) provided so as to be arranged lower than the first aperture during operation of the turbomachine, the retention chamber (20) being arranged so that the fluid coming from the upstream stretch (12) flows by gravitational flow towards the retention chamber (20), the drainage conduit portion further comprising an obturator (30, 130, 230) configured to obturate the second aperture (24, 124), the first and second apertures (22, 122, 24, 124) being provided so that when the obturator (30, 130, 230) obturates the second aperture (24, 124), the retention chamber (20) is capable of retaining fluid while allowing a fluid overflow to flow from the upstream stretch (12) to the downstream stretch (16) through the first aperture (22, 122), and when the obturator (30, 130, 230) does not obturate the second aperture (24, 124), the fluid can flow from the upstream stretch (12) to the downstream stretch (16) at least through the second aperture (24, 124), **characterized by** the portion of a fluid drainage conduit comprising a first tubular wall (14, 114) forming the upstream stretch (12), a second tubular wall (18, 118) forming the downstream stretch (16), the first tubular wall (14, 114) and the second tubular wall (18, 118) being interlocked into one another.

2. The drainage conduit portion (10) according to claim 1, wherein the obturator (30, 130, 230) comprises a valve (36, 134, 236) a control member (34, 134a, 234) of which is accessible from outside the drainage conduit portion.

3. The drainage conduit portion (10) according to claim 1 or 2, the second aperture (24, 124) being arranged so as to allow, when the obturator (30, 130, 230) does not obturate it, communicating the retention chamber (20) with the downstream stretch (16).

4. The drainage conduit portion (10) according to any one of claims 1 to 3, wherein the first aperture (22, 122) is closer to the upstream stretch (12) than the second aperture (24, 124), and/or the second aperture (24, 124) is closer to the downstream stretch (16) than the first aperture (22, 122).

5. The drainage conduit portion (10) according to any one of claims 1 to 4, wherein the first tubular wall (14, 114) and the second tubular wall (18, 118) are coaxial.

6. The drainage conduit portion (10) according to any one of claims 1 to 5, wherein the obturator (30, 130, 230) is mounted in an orifice (24, 42) of the first wall (14, 114) and an orifice of the second wall (40), opposite one another.

7. The drainage conduit portion (10) according to any one of claims 1 to 6, wherein the obturator (30, 130, 230) is mounted removable.

8. A drainage assembly (100) comprising at least two drainage conduit portions (10a, 10b) according to any one of claims 1 to 7, the respective downstream stretches (16) of which open onto drainage conduits which join into a common drainage conduit (60) intended to open onto a recovery area (70) whose content can be observed.

9. A method for detecting a leak on a turbomachine provided with a drainage assembly (100) according to claim 8, comprising the following steps for at least part of the drainage conduit portions:
- obturating the respective second apertures (24, 124), if necessary by actuating the corresponding obturators (30, 130, 230);
- after a predetermined duration, successively actuating the respective obturators (30, 130, 230) of the drainage conduit portions (10a, 10b) so that the obturators do not obturate the second corresponding apertures (24, 124).
